# EUROPÄISCHE PATENTANMELDUNG

(11) **EP 2 614 988 A2**
(43) Veröffentlichungstag der Anmeldung: **17.07.2013**
(21) Anmeldenummer: 13000082.1
(22) Anmeldetag: 09.01.2013
(51) Int. Cl.: B60N 3/02, F16B 2/18

(54) **Befestigungselement**

(30) Priorität: 11.01.2012 DE 102012000328
(71) Anmelder: HAPPICH GmbH, 42119 Wuppertal (DE)
(72) Erfinder: Bednarz, Joachim, 42287 Wuppertal (DE)

(57) **Zusammenfassung**

Die Erfindung bezieht sich auf ein Befestigungselement 10 zur Fixierung von Bauteilen, insbesondere von Halteschlaufen oder Befestigungsschlaufen oder Teilen davon, auf Rohrelementen, insbesondere Haltestangenelementen. Es ist dabei erfindungsgemäß vorgesehen, dass das Befestigungselement 10 wenigstens ein das Rohrelement umgreifendes, das zu fixierende Bauteil tragendes Verrastungselement 11 umfasst, wobei das Verrastungselement 11 eine selbstklemmende/-arretierende Mechanik aufweist.

## Beschreibung

Die Erfindung bezieht sich auf ein Befestigungselement zur Fixierung von Bauteilen, insbesondere von Halteschlaufen oder Befestigungsschlaufen oder Teilen davon, auf Rohrelementen, insbesondere Haltestangenelementen.

Es sind dazu aus der Praxis bzw. aus dem Stand der Technik verschiedene derartige Befestigungselemente zur Fixierung von Bauteilen, insbesondere von Halteschlaufen oder Befestigungsschlaufen oder Teilen davon, auf Rohrelementen, insbesondere Haltestangenelementen bekannt. Dabei ist in der Regel ein Anbohren beispielsweise der Haltestangen und ein Fixieren der Befestigungselemente mit z.B. Schrauben erforderlich. Es sind derartige Bohrarbeiten bezüglich der Anbringung dieser Befestigungselemente äußerst nachteilig. Aus dem Stand der Technik sind aber auch andere Lösungen bekannt, die allerdings in konstruktiver Hinsicht äußerst aufwendig und in montagetechnischer Hinsicht ebenfalls nachteilig sind. Es sei dazu beispielhaft auf folgende Druckschrift verwiesen:

Das DE 20 2007 012 151 U1 bezieht sich auf eine Vorrichtung zum Sichern einer auf einer Haltestange in einem Personenbeförderungsmittel verschiebbar aufgezogenen Halteschlaufe oder einer Befestigungsschlaufe oder Teilen einer solchen Befestigungsschlaufe an einem Befestigungselement einer Halteschlaufe oder an einem Haltegriff für Personen gegen seitliches Verschieben. Diese Vorrichtung ist gekennzeichnet durch seitlich der Halteschlaufe, Befestigungsschlaufe oder dem Befestigungselement angeordnete, obenseitig durch ein Brückenelement miteinander verbundene, einzelne schellenförmige Fixierelemente, die mit unterseitigen Fixierelementen oder mittels untenseitigem längsgeschlitzten Brückenelement verbundenen Fixierelementen an der Haltestange durch Form- und Kraftschluss statisch befestigt sind. Durch die Sicherung der Halteschlaufe, der Befestigungsschlaufe oder des Befestigungselementes, z.B. einer Hülse, die auf der Haltestange mittels der seitlich angebrachten schellenförmigen Fixierelemente, die paarweise zusammengefügt werden und dabei formschlüssig an die Haltestange gepresst werden, gesichert werden, sei ein longitudinales Verschieben der Halteschlaufe oder des Haltegriffes auf der Haltestange nicht möglich. Diese könnten in definierten Abständen auf der durchgehend im Fahrzeug angebrachten Haltestange angeordnet und gesichert sein. Personen, die sich daran festhalten, bräuchten ein Verschieben der Halteschlaufe oder des Haltegriffes nicht zu befürchten. Die Vorrichtung sei auch so ausgebildet, dass sie nachträglich auf einfache Weise montierbar sei. Die hier beschriebene Anordnung ist wie erwähnt in konstruktiver Hinsicht äußerst aufwendig und in montagetechnischer Hinsicht ebenfalls nachteilig.

Ausgehend von diesen bekannten Befestigungselementen zur Fixierung von Bauteilen liegt der Erfindung die Aufgabe zu Grunde, die bekannten Anordnungen unter Beibehaltung der bisherigen Vorteile in der Weise zu verbessern bzw. weiter zu entwickeln, dass die Nachteile der bekannten Ausführungsformen vermieden werden, wobei insbesondere eine einfache Montage der Bauteile wie z.B. Halteschlaufen mit festen Positionen auf z.B. den Haltestangen erreicht werden soll.

Die Aufgabe wird erfindungsgemäß dadurch gelöst, dass das Befestigungselement wenigstens ein das Rohrelement umgreifendes, das zu fixierende Bauteil tragendes Verrastungselement umfasst, wobei das Verrastungselement eine selbstklemmende/-arretierende Mechanik aufweist. Auf diese Weise wird erstmalig mit einfachen Mitteln ein solches Befestigungselement zur Fixierung von Bauteilen geschaffen, bei dem durch die Ausbildung des Verrastungselementes mit einer selbstklemmenden/- arretierenden Mechanik eine einfache Montage der Bauteile wie z.B. Halteschlaufen mit festen Positionen auf z.B. den Haltestangen ohne zusätzliches Werkzeug erreicht wird, wobei nur ein Bauteil erforderlich ist. Das erfindungsgemäße Befestigungselement ist dabei auch einfach und kostengünstig herstellbar.

Bei der bevorzugten Ausführungsform der vorliegenden Erfindung ist das Verrastungselement als wenigstens ein hülsenförmiges Spannelement mit einem laschenartigen Verriegelungselement ausgebildet. Es erfolgt hier die Arretierung/Klemmung in einfacher Weise über ein Betätigen des laschenartigen Verriegelungselementes.

Es empfiehlt sich nach einem weiteren Merkmal der vorliegenden Erfindung, dass das laschenartige Verriegelungselement über wenigstens ein Filmscharnier mit dem hülsenförmigen Spannelement verbunden ist. Weiterhin ist dabei vorgesehen, dass das hülsenförmige Spannelement im Bereich des laschenartigen Verriegelungselementes wenigstens ein dem Filmscharnier gegenüberliegendes, mit dem laschenartigen Verriegelungselement zusammenwirkendes Gegenlager aufweist. Es wird dabei die Arretierung/Klemmung in einfacher Weise dadurch erreicht, dass beim Herunterdrücken des laschenartigen Verriegelungselementes auf das Gegenlager die beiden Enden des hülsenförmigen Spannelementes zusammengezogen werden und sich um z.B. die Haltestange legen. Es weist dabei das Verrastungselement zur sicheren Verriegelung des laschenartigen Verriegelungselementes in der Endstellung links und/oder rechts von diesem angeordnete Ratsnasen auf.

Zweckmäßig ist es nach einem weiteren Merkmal der vorliegenden Erfindung, dass das laschenartige Verriegelungselement innenseitig wenigstens ein durch eine dafür in dem hülsenförmigen Spannelement vorgesehene Öffnung durchgreifendes, mit dem Rohrelement zusammenwirkendes rutschhemmendes Klemmelement aufweist. Es kann dieses Klemmelement z.B. als ein im 2-K-Verfahren angespritztes oder eingestecktes Gummi- oder sonstig rutschhemmendes Klemmelement ausgebildet sein, das durch die Öffnung auf z.B. die Haltstange drückt und für eine ausreichende Festigkeit des Befestigungselementes gegen Verrutschen sorgt. Zusätzlich kann das rutschhemmende Klemmelement auch Bestandteil des hülsenförmigen Spannelementes sein.

Nach einem weiteren Merkmal der vorliegenden Erfindung ist vorgesehen, dass das Verrastungselement im Bereich des laschenartigen Verriegelungselementes einen Montageschlitz aufweist. Über diesen Montageschlitz wird das Befestigungselement auf z.B. der Haltestange montiert, derart, dass zur Montage auf die Haltestange das laschenartige Verriegelungselement nach oben aufgestellt wird, das Befestigungselement über den Montageschlitz aufgebogen und auf die Haltestange gesteckt wird, und nach der Positionierung auf der Haltestange das laschenartige Verriegelungselement wieder nach innen eingeklappt und verrastet wird.

Nach einem letzten Merkmal der vorliegenden Erfindung ist vorgesehen, dass das Befestigungselement als vormontierte Baueinheit mit Halteschlaufe oder Befestigungsschlaufe oder Teilen davon ausgebildet ist. Hier kann die Montage bzw. die Verrastung z.B. bei aufgestelltem laschenartigen Verriegelungselement mit z.B. vormontierter Halteschlaufe durch ein Ziehen dieser nach unten erfolgen.

Die Erfindung ist in den Figuren der Zeichnung in einem Ausführungsbeispiel dargestellt. Es zeigen:
- Fig. 1: eine schematische, perspektivische, stark vereinfachte Darstellung des erfindungsgemäßen Befestigungselementes,
- Fig. 2: eine schematische, stark vereinfachte, weggebrochene Seitenansicht des erfindungsgemäßen Befestigungselementes.

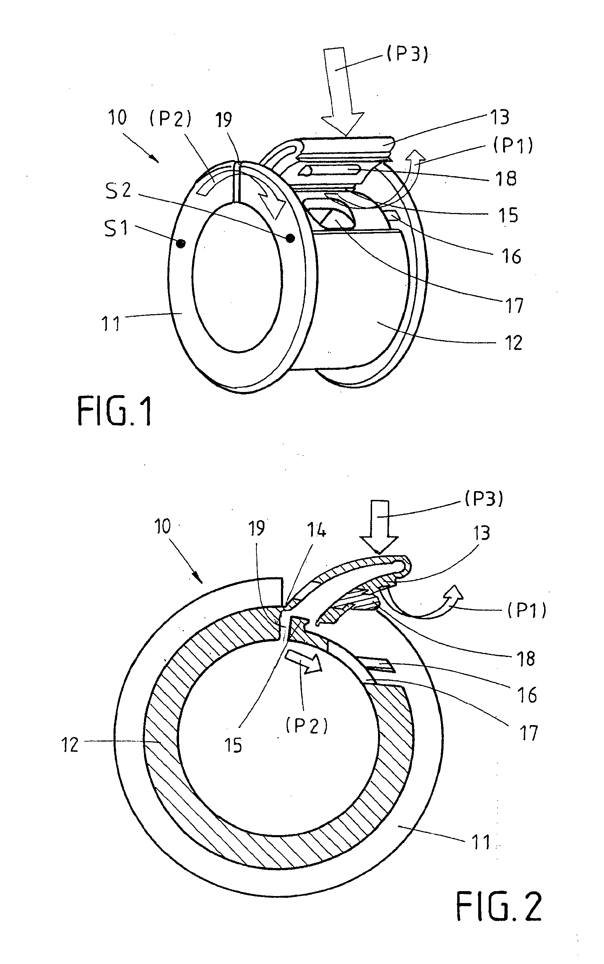

Die erfindungsgemäße Anordnung bezieht sich auf ein Befestigungselement zur Fixierung von Bauteilen, insbesondere von Halteschlaufen oder Befestigungsschlaufen oder Teilen davon, auf Rohrelementen, insbesondere Haltestangenelementen, und ist generell mit 10 bezeichnet. Es ist dazu in der Fig. 1 der Zeichnung das erfindungsgemäße Befestigungselement 10 in einer schematischen, perspektivischen, stark vereinfachten Darstellung gezeigt und in der Fig. 2 der Zeichnung in einer schematischen, stark vereinfachten, weggebrochenen Seitenansicht. Die zu fixierenden Bauteile wie z.B. Halteschlaufe und das Rohrelement, insbesondere Haltestangenelement, sind in den Figuren der Zeichnung nicht separat dargestellt und können für sich betrachtet eine an sich bekannte Ausbildung aufweisen.

Es ist dabei erfindungsgemäß vorgesehen, dass das Befestigungselement 10 wenigstens ein das Rohrelement umgreifendes, das zu fixierende Bauteil tragendes Verrastungselement 11 umfasst, wobei das Verrastungselement 11 eine selbstklemmende/-arretierende Mechanik aufweist. Auf diese Weise wird erstmalig mit einfachen Mitteln ein solches Befestigungselement 10 zur Fixierung von Bauteilen geschaffen, bei dem durch die Ausbildung des Verrastungselementes 11 mit einer selbstklemmenden/-arretierenden Mechanik eine einfache Montage der Bauteile wie z.B. Halteschlaufen mit festen Positionen auf z.B. den Haltestangen ohne zusätzliches Werkzeug erreicht wird, wobei nur ein Bauteil erforderlich ist. Das erfindungsgemäße Befestigungselement 10 ist dabei auch einfach und kostengünstig herstellbar.

Bei der dargestellten Ausführungsform der vorliegenden Erfindung ist das Verrastungselement 11 als ein hülsenförmiges Spannelement 12 mit einem laschenartigen Verriegelungselement 13 ausgebildet, siehe z.B. die Fig. 1 der Zeichnung. Es erfolgt hier die Arretierung/Klemmung in einfacher Weise über ein Betätigen des laschenartigen Verriegelungselementes 13. Dabei ist, siehe Fig. 2, das laschenartige Verriegelungselement 13 über ein Filmscharnier 14 mit dem hülsenförmigen Spannelement 12 verbunden. Weiterhin weist das hülsenförmige Spannelement 12 im Bereich des laschenartigen Verriegelungselementes 13 ein dem Filmscharnier 14 gegenüberliegendes, mit dem laschenartigen Verriegelungselement 13 zusammenwirkendes Gegenlager 15 auf. Es wird dabei die Arretierung/Klemmung in einfacher Weise dadurch erreicht, dass beim Herunterdrücken des laschenartigen Verriegelungselementes 13 in Pfeilrichtung P3 auf das Gegenlager 15 die beiden Enden S1 und S2 des hülsenförmigen Spannelementes 12 zusammengezogen werden und sich um z.B. die Haltestange legen. Es weist dabei das Verrastungselement 11 zur sicheren Verriegelung des laschenartigen Verriegelungselementes 13 in der Endstellung links und rechts von diesem angeordnete Ratsnasen 16 auf, siehe Fig. 1.

Weiterhin weist, siehe Fig. 1, das laschenartige Verriegelungselement 13 innenseitig ein durch eine dafür in dem hülsenförmigen Spannelement 12 vorgesehene Öffnung 17 durchgreifendes, mit dem Rohrelement zusammenwirkendes rutschhemmendes Klemmelement 18 auf. Es ist dabei dieses Klemmelement 18 hier als ein im 2-K-Verfahren angespritztes oder eingestecktes Gummi- oder sonstig rutschhemmendes Klemmelement 18 ausgebildet, das durch die Öffnung 17 auf z.B. die Haltstange drückt und für eine ausreichende Festigkeit des Befestigungselementes 10 gegen Verrutschen sorgt. Zusätzlich kann das rutschhemmende Klemmelement 18 auch Bestandteil des hülsenförmigen Spannelementes 12 sein.

Das Verrastungselement 11 weist außerdem, siehe Fig. 2, im Bereich des laschenartigen Verriegelungselementes 13 einen Montageschlitz 19 auf. Über diesen Montageschlitz 19 wird das Befestigungselement 10 auf z.B. der Haltestange montiert, derart, dass zur Montage auf die Haltestange das laschenartige Verriegelungselement 13 in Pfeilrichtung P1 nach oben aufgestellt wird, das Befestigungselement 10 über den Montageschlitz 19 in Pfeilrichtung P2 aufgebogen und auf die Haltestange gesteckt wird, und nach der Positionierung auf der Haltestange das laschenartige Verriegelungselement 13 wieder nach innen eingeklappt und mittels der Rastnasen 16 verrastet wird.

Schließlich ist bei einer abgewandelten, hier nicht dargestellten Ausführungsform der vorliegenden Erfindung vorgesehen, dass das Befestigungselement 10 als vormontierte Baueinheit mit Halteschlaufe oder Befestigungsschlaufe oder Teilen davon ausgebildet ist. Hier kann die Montage bzw. die Verrastung z.B. bei aufgestelltem laschenartigen Verriegelungselement 13 mit z.B. vormontierter Halteschlaufe durch ein Ziehen dieser nach unten erfolgen.

Wie bereits erwähnt, sind die dargestellten Ausführungsformen nur eine beispielsweise Verwirklichung der Erfindung. Diese ist nicht darauf beschränkt, es sind vielmehr noch mancherlei Abänderungen und Ausbildungen möglich. So sind insbesondere Abwandlungen in der konstruktiven Ausbildung des erfindungsgemäßen Befestigungselementes 10 denkbar, weiterhin eine Anwendung bei anderen Bauteilen als den erwähnten Halteschlaufen oder Befestigungsschlaufen oder Teilen davon. Im übrigen können die erwähnten Rohrelemente neben den üblichen runden Profilen auch davon abweichende Profile aufweisen.

### Bezugszeichenliste:

10. Befestigungselement
11. Verrastungselement
12. hülsenförmiges Spannelement
13. laschenartiges Verriegelungselement
14. Filmscharnier (zwischen 12 und 13)
15. Gegenlager (an 12 für 13)
16. Rastnase (für 13)
17. Öffnung (in 12 für 18)
18. Klemmelement (an 13)
19. Montageschlitz (an 11 bei 13)

## Patentansprüche

1. Befestigungselement 10 zur Fixierung von Bauteilen, insbesondere von Halteschlaufen oder Befestigungsschlaufen oder Teilen davon, auf Rohrelementen, insbesondere Haltestangenelementen, **dadurch gekennzeichnet, dass** das Befestigungselement 10 wenigstens ein das Rohrelement umgreifendes, das zu fixierende Bauteil tragendes Verrastungselement 11 umfasst, wobei das Verrastungselement 11 eine selbstklemmende/-arretierende Mechanik aufweist.

2. Befestigungselement nach Anspruch 1, **dadurch gekennzeichnet, dass** das Verrastungselement 11 als wenigstens ein hülsenförmiges Spannelement 12 mit einem laschenartigen Verriegelungselement 13 ausgebildet ist.

3. Befestigungselement nach Anspruch 2, **dadurch gekennzeichnet, dass** das laschenartige Verriegelungselement 13 über wenigstens ein Filmscharnier 14 mit dem hülsenförmigen Spannelement 12 verbunden ist.

4. Befestigungselement nach Anspruch 3, **dadurch gekennzeichnet, dass** das hülsenförmige Spannelement 12 im Bereich des laschenartigen Verriegelungselementes 13 wenigstens ein dem Filmscharnier 14 gegenüberliegendes, mit dem laschenartigen Verriegelungselement 13 zusammenwirkendes Gegenlager 15 aufweist.

5. Befestigungselement nach einem der Ansprüche 2 bis 4, **dadurch gekennzeichnet, dass** das Verrastungselement 11 zur sicheren Verriegelung des laschenartigen Verriegelungselementes 13 links und/oder rechts von diesem angeordnete Ratsnasen 16 aufweist.

6. Befestigungselement nach einem der Ansprüche 2 bis 5, **dadurch gekennzeichnet, dass** das laschenartige Verriegelungselement 13 innenseitig wenigstens ein durch eine dafür in dem hülsenförmigen Spannelement 12 vorgesehene Öffnung 17 durchgreifendes, mit dem Rohrelement zusammenwirkendes rutschhemmendes Klemmelement 18 aufweist.

7. Befestigungselement nach einem der Ansprüche 2 bis 6, **dadurch gekennzeichnet, dass** das Verrastungselement 11 im Bereich des laschenartigen Verriegelungselementes 13 einen Montageschlitz 19 aufweist.

8. Befestigungselement nach einem der Ansprüche 2 bis 7, **dadurch gekennzeichnet, dass** das Befestigungselement 10 als vormontierte Baueinheit mit Halteschlaufe oder Befestigungsschlaufe oder Teilen davon ausgebildet ist.
